# EUROPEAN PATENT APPLICATION

(11) **EP 2 476 781 A1**
(43) Date of publication of application: **18.07.2012**
(21) Application number: 10815156.4
(22) Date of filing: 10.09.2010
(51) Int. Cl.: C25B 1/04, C25B 9/00, F02M 25/12

(54) **APPARATUS FOR GENERATING MIXED GAS OF HYDROGEN AND OXYGEN, AND INTERNAL COMBUSTION ENGINE USING THE SAME**

(30) Priority: 10.09.2009 JP 2009231942
(71) Applicant: Legarsi Co., Ltd., Minato-ku, Tokyo 106-6111 (JP); Trust High Tech Co., Ltd., Yokohama-shi, Kanagawa 224-0033 (JP)
(72) Inventor: YANAGIHARA, Nobumitsu, Yokohama-shi Kanagawa 224-0033 (JP); IMAMURA, Mitsuo, Tokyo 107-0052 (JP)
(74) Representative: Grünecker, Kinkeldey, Stockmair & Schwanhäusser
(86) International application number: PCT/JP2010/005553
(87) International publication number: WO 2011/030556

(57) **Abstract**

The oxy-hydrogen gas generator which generates hydrogen gas with a low current and generates little water vapor is provided. The oxy-hydrogen gas generator includes a power source, an inverter electrically connected to the power source and an electrolytic cell which is electrically connected to the inverter and internally includes nano-clustered resonant water, an anode and a cathode to be soaked in the nano-clustered resonant water. With this configuration, the generator can be driven with a low current and generates little water vapor.

## Description

### Technical Field

The present invention relates to a generator of hydrogen and oxygen mixed gas, which is Brown's gas (hereinafter, referred to as "oxy-hydrogen gas"), and an internal combustion using the same.

### Background Art

In recent years, technical development emphasizing environmental considerations has been made in various technical fields. In particular, in the technical field of utilizing combustion of fossil fuel such as an internal combustion, technical development aiming for reducing CO₂ emission is actively in progress. For example, one method is to reducing CO₂ emission by conversion to the technology which does not have a combustion process is one method. Including a hybrid vehicle which has been in practical use, an electrically-driven vehicle utilizing various types of power generation and storage technologies is an example of such method.

However, with the present technical standard, there is a technical field which inevitably uses a combustion process of fossil fuel since conversion to the technology which does not have a combustion process cannot be made. For example, ships requiring a large driving force, large-sized automobiles, boilers etc. In such technical field, achievement of consideration to environment by reducing toxic gas and CO₂ gas included in emission gas is conceivable. Reduction of toxic gas and CO₂ gas included in emission gas is concentrated on the point as to how the combustion process approaches perfect combustion by increasing combustion efficiency. Moreover, by increasing the combustion efficiency, required fuel is reduced, whereby fuel efficiency is improved.

As a method of increasing the combustion efficiency, as disclosed in Patent Literature 1 for example, there is a method of using oxy-hydrogen gas. Here, the gas is made by mixing hydrogen gas and oxygen generated by electrolysis of commonly used water with a chemical equivalent ratio of 2:1.

### Citation List

### Patent Literature

PTL 1: Japanese Utility Model Registration No. 3131938

### Summary of Invention

### Technical Problem

Unfortunately, in a method of generating hydrogen gas and oxygen gas using the principle of electrolysis of commonly used water, as the amount of generation is limited, when these gases are used in an oxy-hydrogen gas generator, the generator has to be large-sized and stationary to provide stable combustion. That is, in a case where the oxy-hydrogen generator is used as a driving force source having large load fluctuation, since it is difficult to provide oxy-hydrogen gas stably in the conventional electrolysis of water, increasing the combustion efficiency so that the combustion process approaches perfect combustion has been difficult.

In particular, to generate a large amount of oxy-hydrogen gas by the conventional oxy-hydrogen gas generator, a high voltage such as 100 V and a high current are used. Moreover, due to heat by energization, there is a problem that much water vapor is generated. In vehicles such as an automobiles and ships, it is desired to generate a large amount of hydrogen gas in a low current state.

### Solution to Problem

An object of the present invention is to provide an oxy-hydrogen gas generator which generates hydrogen gas with a low current and generates little water vapor.

An object of the present invention is to provide an oxy-hydrogen gas generator which provides oxy-hydrogen gas stably when oxy-hydrogen gas is used so that combustion in an internal combustion approaches prefect combustion.

In the present invention, there is provided an oxy-hydrogen gas generator including: a power source; an inverter electrically connected to the power source; an electrolytic cell which is electrically connected to the inverter and internally includes an anode and a cathode to which a voltage is applied from the inverter; and nano-clustered resonant water produced by previously applying ultrasonic wave vibration with a predetermined frequency to pure water and stored in the electrolytic cell.

In the present invention, there is provided an internal combustion using an oxy-hydrogen gas generator, the oxy-hydrogen gas generator including: a power source; an inverter electrically connected to the power source; an electrolytic cell which is electrically connected to the inverter and internally includes an anode and a cathode to which a voltage is applied from the inverter; and nano-clustered resonant water produced by previously applying ultrasonic wave vibration with a predetermined frequency to pure water and stored in the electrolytic cell.

### Advantageous Effects of Invention

Compared to the conventional oxy-hydrogen gas generator, in the oxy-hydrogen gas generator according to the present invention, a large amount of oxy-hydrogen gas can be stably generated. Moreover, as a result of an application to an internal combustion, combustion efficiency in an internal combustion using fossil fuel can be increased. By doing this, CO₂ emission can be reduced.

Further, in the oxy-hydrogen gas generator according to the present invention, a large amount of oxy-hydrogen gas can be generated with a low voltage and a low current. Accordingly, the generator can be downsized as a whole and used for vehicles from an automobile to a large-sized automobile and ships etc.

### Brief Description of Drawings

Fig. 1 shows an oxy-hydrogen gas generator according to the present invention.
Fig. 2A shows an example of an electrode structure of the oxy-hydrogen gas generator according to the present invention.
Fig. 2B shows a gas collection unit of the oxy-hydrogen gas generator according to the present invention.
Fig. 3 is a system diagram of the first embodiment of the oxy-hydrogen gas generator according to the present invention.
Fig. 4 is a flow chart of control of an inverter of the first embodiment of the oxy-hydrogen gas generator according to the present invention.
Fig. 5 is a system diagram of the second embodiment of the oxy-hydrogen gas generator according to the present invention.
Fig. 6 is a flow chart of control of an inverter of the second embodiment of the oxy-hydrogen gas generator according to the present invention.
Fig. 7 is an explanation view of an internal combustion using the oxy-hydrogen gas generator according to the present invention.

### Description of Embodiments

### (First Embodiment)

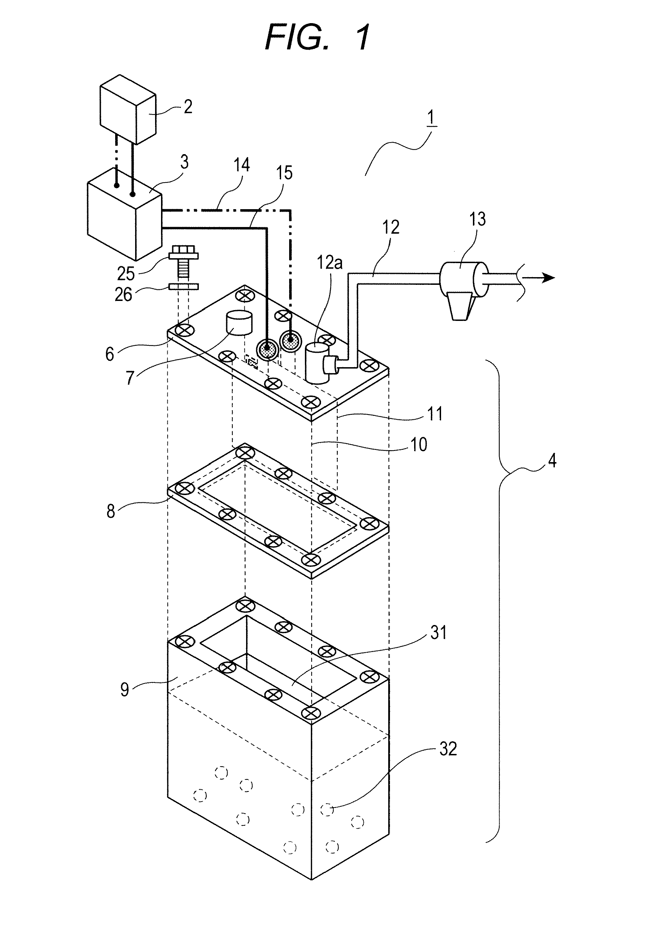

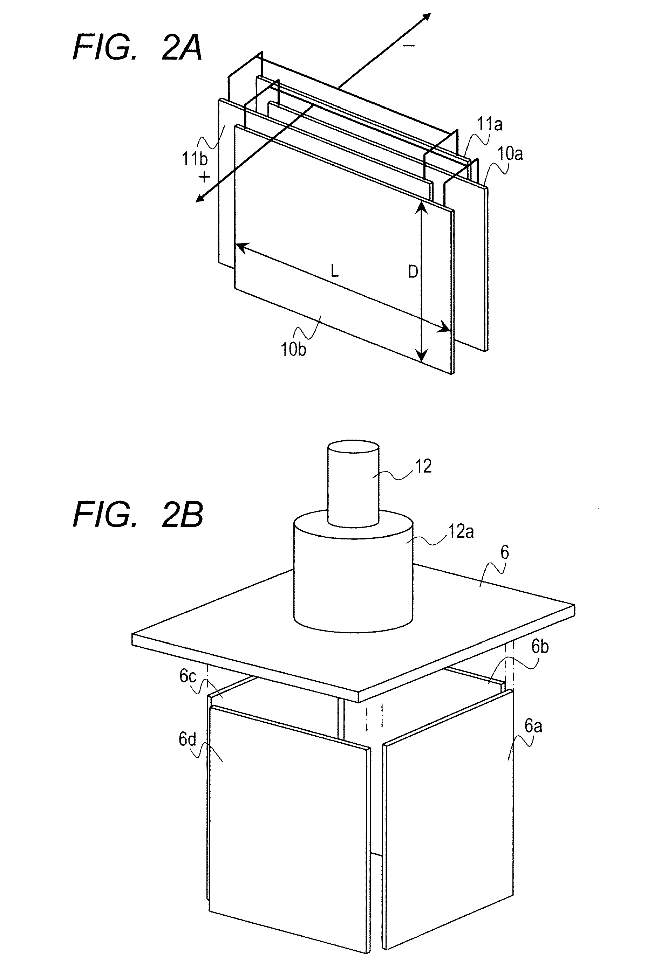

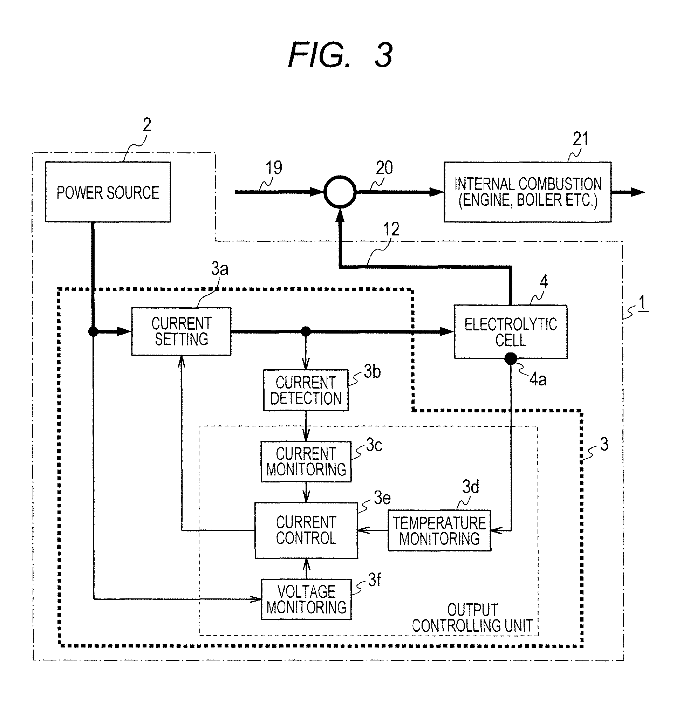

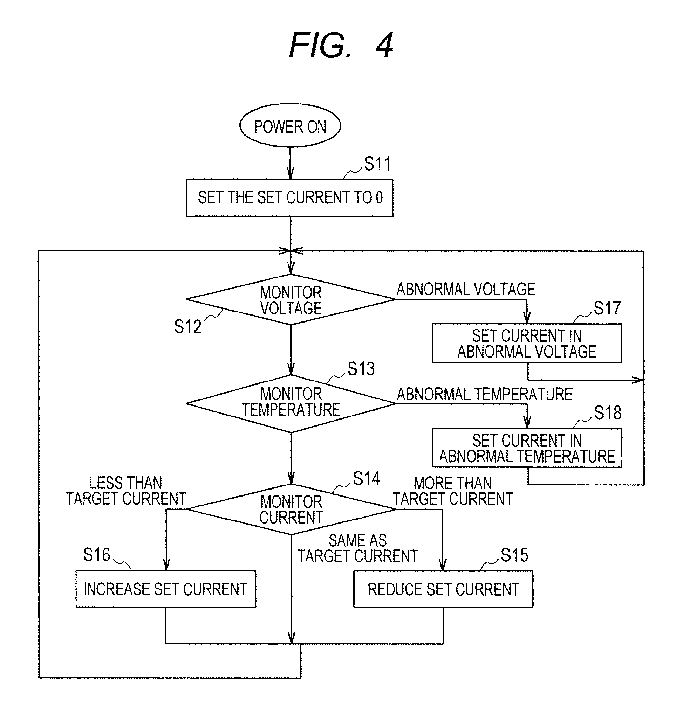

With reference to Figs. 1 to 4, an oxy-hydrogen gas generator 1 according to the present invention will be explained. Fig. 1 shows an oxy-hydrogen gas generator according to the present invention. Fig. 2A shows an example of an electrode structure of the oxy-hydrogen gas generator according to the present invention, and Fig. 2B shows a gas collection unit of the oxy-hydrogen gas generator according to the present invention. Moreover, Fig. 3 is a system diagram of the first embodiment of the oxy-hydrogen gas generator according to the present invention. Fig. 4 is a flow chart of control of an inverter.
The oxy-hydrogen gas generator 1 includes a power source 2, an inverter 3, an electrolytic cell 4 and an oxy-hydrogen gas supply tube 12.

The power source 2 can be selected without particular limitation as long as it can provide electric power to the electrolytic cell 4. For example, the power source 2 can be the power source of 24 V. The anode and the cathode of the power source 2 are connected to an anode side electrode plate 10 and cathode side electrodes 11a and 11b of the electrolytic cell 4 via the inverter 3. The voltage of the power source 2 is decreased by the inverter 3. For example, in this embodiment, the voltage is decreased from 24 V to 12 V. By doing this, the power source 2 can be used for a mobile vehicles such as an automobile and a ship.

The electrolytic cell 4 is a vessel with the configuration that a cell 9 is closed by an upper lid 6. The upper lid 6 is mounted to the cell 9 interposing a packing 8 made of insulation materials. The upper lid 6 is threadedly fitted into the cell 9 by a washer bolt 25 interposing an insulation packing 26. This prevents discharge of oxy-hydrogen gas which is ultrafine particles generated in an inner portion of the electrolytic cell 4 to the outside. Moreover, special silicone is used for an inner cell of the electrolytic cell 4 to prevent electric leakage. For each portion of the cell 9, if an acrylic resin material is used for example, heat generated in the cell 9 is prevented from transferring to the outside.

Electrolytic solution is poured into the cell 9 of the electrolytic cell 4 from an electrolytic solution supply port 7 and filled in the cell 9. As electrolytic solution, so-called nano-clustered resonant water 31 is used. In the present application, "nano-clustered resonant water" is defined as pre-produced water by applying vibration of an ultrasonic wave band to pure water for a predetermined time. In this embodiment, nano-clustered resonant water produced by applying ultrasonic wave vibration of 36 kHz for 24 hours for example is used.
Moreover, in the electrolytic solution of the cell 9 of the electrolytic cell 4, hydroxide such as potassium hydroxide and sodium hydroxide is added as a catalyst.

In addition, tourmaline 32 may be added in the electrolytic solution of the cell 9 of the electrolytic cell 4. The tourmaline is dravite tourmaline for example, and large-sized one to some degree is applied. An effect of generating minus ion can be expected. For example, tourmaline shaped in a spherical body may be applied. This reduces attachments to the electrodes.

In the electrolytic solution of the electrolytic cell 4, the anode side electrode plate 10 and the cathode side electrode 11 connected to the anode and the cathode of the power source 2 respectively are soaked. Note that Fig. 1 schematically shows a pair of the anode side electrode plate 10 and the cathode side electrode 11, but in fact, as shown in Fig. 2A, the cathode side electrode plate and the anode side electrode plate are recognized as one set, and a plurality of sets of electrodes is preferably soaked in the electrolytic solution. That is, one set of anode side electrode plate 10 and cathode side electrode 11 is configured by alternatively arranging anode side electrode plates 10a, 10b and the cathode side electrodes 11a, 11b with a constant interval. A plurality of sets of such electrodes is prepared to be soaked in the electrolytic cell 4. For example, if six sets of electrodes are used, 24 electrodes are used. Each of the anode side electrode plates 10a, 10b and the cathode side electrodes 11a, 11b uses, as the material, reinforced stainless alloy (SUS316) and titanium alloy for example. Further, when the titanium alloy is used, titanium alloy having iridium or a platinum layer on its surface such as titanium alloy on whose surface iridium is evaporated or titanium alloy having a platinum surface layer by plate processing can be used, but not limited to this.

Moreover, each of the anode side electrode plates 10a, 10b and the cathode side electrodes 11a, 11b is shaped to have a long side with the length L and a short side with the length D, and it is preferably soaked in the electrolytic solution of the electrolytic cell 4 such that the short side is the depth direction of the electrolytic solution of the electrolytic cell 4. For example, length D: length L=1:2.

In the electrolytic cell, according to the principle of electrolysis of water, by supplying electric power from the power source 2, in the anode side electrode plates 10a, 10b, the anode side electrode plates 10a, 10b react to the electrolytic solution to generate hydroxide ion (OH⁻) and receive an electron. The electron flows to the cathode side electrodes 11a, 11b. In the cathode side electrodes 11a, 11b, hydrogen ion (H⁺) receives the electron of the cathode side electrode 11 to become a hydrogen molecule (H₂). As the electrolytic solution, by using not merely pure water but nano-clustered resonant water in which a cluster of water molecule is broken to be a single water molecule, hydrogen ion (H⁺) and hydroxide ion (OH⁻) are easily generated in the electrolytic solution. Moreover, by using tourmaline, electron discharge in the cathode side electrodes 11a, 11b is promoted. Further, by using spherical or granular tourmaline, attachments to the electrode are reduced to enhance stability of the electrode.

As shown in Fig. 2B, the oxy-hydrogen gas supply tube 12 that delivers oxy-hydrogen gas generated in the electrolytic cell 4 is connected to the upper lid 6 of the electrolytic cell 4. The oxy-hydrogen gas supply tube 12 communicates with the upper lid 6 and an inner portion at a gas collection port 12a. To the upper lid 6 adjacent to the gas collection port 12a on the inner side of the electrolytic cell 4, partitions 6a, 6b, 6c, and 6d are provided on the periphery of the gas collection port 12a to surround the same and extend in the orthogonal direction to the upper lid 6. Gaps of several millimeters are provided among the partitions 6a, 6b, 6c, and 6d. The generated oxy-hydrogen gas passes through these gaps, flows to spaces defined by the partitions 6a, 6b, 6c, and 6d and is delivered to the oxy-hydrogen gas supply tube 12 from the gas collection port 12a. With the partitions 6a, 6b, 6c and 6d, water vapor generated due to increase of the temperature of water which is the electrolytic solution of the electrolytic cell 4 is blocked, and only the generated oxy-hydrogen gas enters into the space defined by the partitions 6a, 6b, 6c, and 6d. This prevents flowing of the oxy-hydrogen gas to the oxy-hydrogen gas supply tube 12.

Further, a drainage valve 13 is provided to the oxy-hydrogen gas supply tube 12, and even when water vapor which slightly enters the space defined by the partitions 6a, 6b, 6c, and 6d is delivered to the oxy-hydrogen gas supply tube 12 together with the oxy-hydrogen gas, the water vapor can be removed from the oxy-hydrogen gas supply tube 12 as water.

By using nano-clustered resonant water and tourmaline in the electrolytic cell 4 as described above, the amount of hydrogen generation is remarkably increased. Because of this, the amount of hydrogen generation to the energization amount from the power source 2 is increased, and the fluctuation of the amount of hydrogen generation to the change of the energization amount may be increased simultaneously. When the fluctuation of the amount of hydrogen generation is increased, a ratio of oxy-hydrogen gas to be supplied to fuel gas is fluctuated, which prevents stable combustion efficiency. Accordingly, controlling the energization amount from the power source 2 by the inverter 3 is required. By the inverter 3, the actual current amount flowing in the electrolytic cell 4 is maintained at a predetermined amount, and increase of the temperature of the electrolytic solution is inhibited to generate oxy-hydrogen gas stably.

The inverter 3 includes current setting means 3a, current detecting means 3b, current monitoring means 3c, current controlling means 3e, temperature monitoring means 3d and voltage monitoring means 3f, and controls the current flowing to the electrolytic solution. The current setting means 3a is connected to the power source 2 and supplied with the converted input voltage. The current setting means 3a is connected to the anode side electrode plates 10a, 10b and the cathode side electrodes 11a, 11b of the electrolytic cell 4. The current setting means 3a flows the current to the anode side electrode plates 10a, 10b and cathode side electrodes 11a, 11b and sets to a target current which is a predetermined current value. The current value actually flowed from the inverter 3 to the anode side electrode plate 10 and the cathode side electrodes 11a, 11b is detected by the current detecting means 3b. The detected current is converted to a control numerical value by the current monitoring means 3c. On the other hand, a temperature sensor 4a is attached to the electrolytic cell 4 to detect the temperature of the electrolytic cell 4. The temperature detected by the temperature sensor 4a is converted to a control numerical value by the temperature monitoring means 3d. The voltage monitoring means 3f detects the primary side voltage of the power source 2 before the input to the inverter 3 (a voltage inputted from the power source 2 to the inverter 3) and converts it to a control numerical value.

A sequence of the inverter 3 will be explained with reference to Fig. 3. Fig. 3 is a flow chart of the inverter 3 of the oxy-hydrogen gas generator 1 according to the present invention. First, by the current setting means 3a, a voltage is set such that the set current is 0 (S11). After that, the voltage between the anode side electrode plates 10a, 10b and the cathode side electrodes 11a, 11b is applied and the current is started to flow to the electrolytic solution. By the voltage monitoring means 3f, voltage monitoring is started. If the voltage applied from the power source 2 to the inverter 3 is not abnormal, the process proceeds to temperature monitoring (S13), and if the voltage is abnormal, a command is transmitted to the current controlling means 3e for setting a previously set current in an abnormal voltage (S17). The current controlling means 3e which receives the command transmits a command to the current setting means 3a for setting the previously set current in an abnormal voltage. According to this, the current setting means 3b sets the current in an abnormal voltage.

Thereafter, the process proceeds to temperature monitoring (S13). First, the temperature of the temperature sensor 4a is detected (S13). By the temperature monitoring (S13), if the temperature of the electrolytic cell 4 reaches the limit temperature, it is regarded as an abnormal temperature, and a command is transmitted to the current controlling means 3e for setting a previously set current in an abnormal temperature (S18). The current controlling means 3e which receives the command transmits a command to the current setting means 3a for setting a previously set voltage in an abnormal temperature. According to this, the current setting means 3b sets the voltage in an abnormal temperature. Here, the limit temperature is the temperature in which evaporation of the inner electrolytic solution is started, and in a case of water, generation of water vapor is started. The current is controlled to prevent exceeding of the limit temperature.

If the temperature detected by the temperature sensor 4a does not reach the limit temperature, the process proceeds to current monitoring (S14). After the voltage is set such that the set current is 0 (S11), the voltage is increased and the current is started to flow. By the current monitoring (S14), the amount of current is monitored. When the voltage between the anode side electrode plates 10a, 10b and the cathode side electrodes 11a, 11b is increased, the current increases only slightly until the electrolysis occurs. With the electrolysis, from a certain point the current is rapidly increased. If a current value actually measured by the current detecting means 3b is larger than the target current, a command for decreasing the voltage to decrease the current is transmitted to the current controlling means 3e (S15). On the other hand, a current value actually measured by the current detecting means 3b is smaller than the target current, a command for increasing the voltage to increase the current is transmitted to the current controlling means 3e (S16).

The current controlling means 3e which receives the command transmits a command to the current setting means 3a for increasing the current in accordance with the received command. According to this, the current setting means 3a set the current corresponding to the command. If a current value actually measured by the current detecting means 3b is within a range of the target current, a command for maintaining the set current is transmitted to the current controlling means 3a or the current condition is maintained.

In the above control steps, each step is constantly repeated with a predetermined timing. The target current is previously determined depending on the size of the electrolytic cell 4 and the amount of electrolytic solution. For example, after the set current becomes 0 to set the target current to 8.0 A (S11), when the voltage is increased and the current is started to flow, the current is rapidly increased from the time when the oxy-hydrogen gas is started to be generated. In accordance with this, the current controlling means 3e controls such that the current actually loaded to the electrolytic solution is a predetermined target current of 8 A. For example, such methods as changing the application timing of the input voltage to control such that a current value is a constant value and controlling the input voltage by changing a voltage value can be performed. For example, by using pulsed application timing, a voltage duty can be changed. By doing this, the application amount of the voltage to nano-clustered resonant water can be controlled to maintain current detected by the current detecting means 3b at the target current.

An effect when nano-clustered resonant water is used is as shown in Table 1. Table 1 is a comparison of the generation amount of oxy-hydrogen gas when nano-clustered resonant water, pure water and commercial ion water are used as the electrolytic solution. In a case where nano-clustered resonant water, pure water and commercial ion water are used as the electrolytic solution, when voltage duty is changed by the inverter 3 such that a target current to be applied to the electrodes is 8.0 V, the amount of generated oxy-hydrogen gas is compared. From this table, it is found that when nano-clustered resonant water is used, the maximum oxy-hydrogen gas is generated when the voltage duty is the minimum. It is shown that, by using nano-clustered resonant water, especially the amount of generation of oxy-hydrogen gas is increased.

**Table 1**

| | Voltage (V) | Duty | Target current (A) | The amount of generation of oxy-hydrogen gas per minute (cc/min) |
|---|---|---|---|---|
| Nano-clustered resonant water | 13 V | 55 | 8.0 | 300 |
| Pure water | 18 V | 75 | 8.0 | 280 |
| Commercial ion water | 15 V | 64 | 8.0 | 300 |

Further, in this embodiment, as the cathode, one in which a titanium alloy plate with the thickness of 1.5 mm is evaporated by iridium with the thickness of 0.5 mm was used. Table 2 is a comparison with the case in which a stainless electrode is used. From this table, it is found that the amount of generation of oxy-hydrogen gas is increased when iridium is evaporated to the titanium alloy plate. In particular, it is shown that, by using the titanium alloy electrode evaporated with iridium, the amount of generation of oxygen-hydrogen gas is increased.

**Table 2**

| # | Voltage (V) | Current (A) | The amount of generation of oxy-hydrogen gas per minute (cc/min) |
|---|---|---|---|
| Stainless electrode | 13 V | 8.0 | 300 |
| Iridium-evaporated titanium alloy | 12 V | 8.0 | 340 |

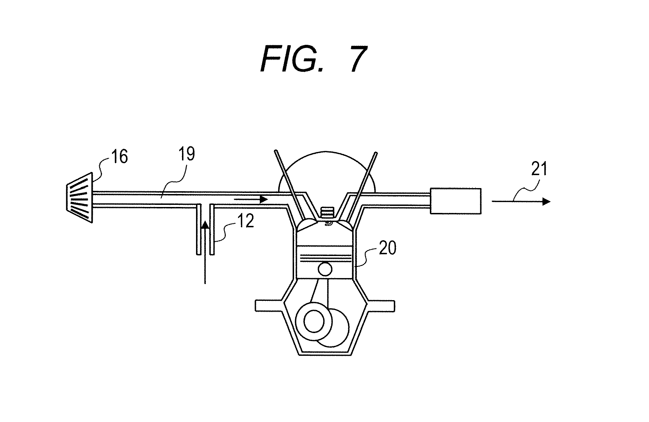

Fig. 7 is an explanation view of an internal combustion 21 using the oxy-hydrogen gas generator 1 according to the present invention. An oxy-hydrogen gas tube 12 is connected to a fuel gas tube 19 communicating between an internal combustion 20 and an inlet 16. The oxy-hydrogen gas generated by the oxy-hydrogen gas generator 1 passes through the oxy-hydrogen gas tube 12 and reaches the fuel gas tube 19, and it is mixed with fuel gas and sucked by the internal combustion 20. By doing this, fuel gas sucked from the inlet 16 is mixed with oxy-hydrogen gas to increase a content ratio of the oxy-hydrogen gas, whereby combustion efficiency is improved and toxic gas can be removed from exhaust gas 21. Moreover, by increasing combustion efficiency, required fuel gas can be reduced and fuel efficiency is improved. As an example of the internal combustion, an engine, a boiler and an incinerator etc. of a general automobile, a large-sized automobile and a ship etc. can be listed.

A performance evaluation when the oxy-hydrogen gas generated by the oxy-hydrogen gas generator 1 of the present application is used in the internal combustion is as follows. Table 3 is a performance comparison example of the internal combustion using the oxy-hydrogen gas generator. In a ship mounting a 6000 cc class engine as the internal combustion, one was provided with the oxy-hydrogen gas generator 1 and the other was not provided, and the amount of consumption of fuel (gasoline) was compared. The ship was anchored on the quay, and comparison experiment was performed in an idling state of 1500 (rpm). In this experiment, when the oxy-hydrogen gas generator is used, oxy-hydrogen gas of 1000 cc per minute is mixed. Also from this experiment, it is found that, in the internal combustion using the oxy-hydrogen gas generator 1, consumption efficiency is improved. This means that combustion efficiency is improved.

**Table 3**

| | |
|---|---|
| | The amount of consumption of fuel gas in an idling state with the number of rotations of 1500 (rpm) |
| When the oxy-hydrogen gas generator is not used | 5 L |
| When the oxy-hydrogen gas generator is used (the oxy-hydrogen gas of 1000 cc per minute is mixed) | 2 L |

### (second Embodiment)

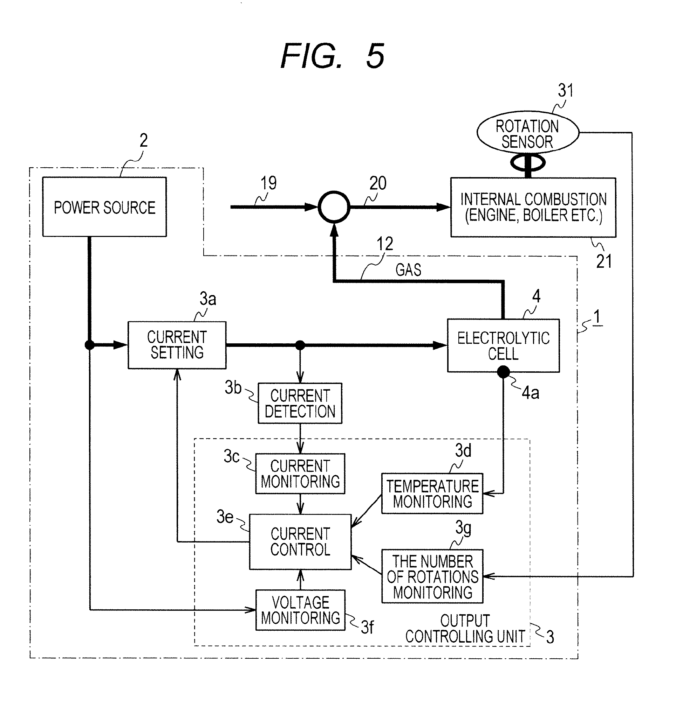

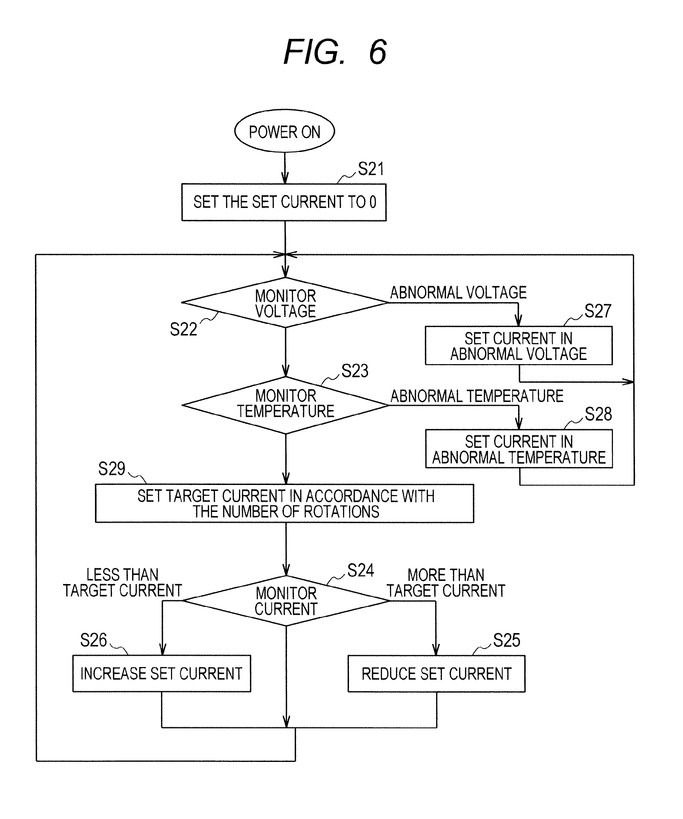

With reference to Figs. 5, 6 and 7, another embodiment of the oxy-hydrogen gas generator 1 according to the present invention will be explained. The first and second embodiments are basically the same, and the difference is that the condition of the internal combustion 20 is taken into the control of the inverter 3. Fig. 5 is a system diagram of the second embodiment of the oxy-hydrogen gas generator 1 according to the present invention. Fig. 6 shows a control flow chart of the inverter in that case. The oxy-hydrogen gas generator 1 excluding an inner portion of the inverter 3 is the same as the first embodiment. Hereinafter, a different portion from the first embodiment will be explained and an explanation of the same portion as the first embodiment is omitted.

As shown in Fig. 6, the internal combustion includes an output shaft, and the number of rotations(revolutions) of the output shaft is detected by a rotation sensor. To detect the number of rotations by the rotation sensor, various methods can be conceived. For example, a method of detecting the number of rotations of an alternator may be applied.

The inverter 3 includes, in addition to the current setting means 3a, the current detecting means 3b, the current monitoring means 3c, the current controlling means 3e, the temperature monitoring means 3d and the voltage monitoring means 3f, the number of rotations monitoring means 3g which monitors the number of rotations of an internal combustion power output section. The operation of the current setting means 3a, the current detecting means 3b, the current monitoring means 3c, the current controlling means 3e, the temperature monitoring means 3d and the voltage monitoring means 3f is the same as in the first embodiment. In the flow chart in Fig. 6, S21 to S28 correspond to S11 to S18 and each operation is the same.

In the second embodiment, the number of rotation monitoring means 3g includes the output shaft of the internal combustion, and in accordance with the number of rotations of the output shaft, a target current is changed. In the flow chart, after temperature monitoring (S23), a step of switching a target current in accordance with the number of rotations of the output shaft is included (S24). For example, from 0 to 800 (rpm), the target current is set to 0.5 A, from 800 to 1500 (rpm), the target current is set to 8.0 A, and in exceeding 1500 (rpm), the target current is set from 8.0 A to 20.0 A. A group of target current values to be switched is previously determined as a predetermined target current value in accordance with the number of rotations. After setting to each target current is performed, the process proceeds to a step of current monitoring (S24, S25, and S26).

That is, in the current monitoring (S24), the amount of current is monitored. When the voltage between the anode side electrode plates 10a, 10b and the cathode side electrodes 11a, 11b is increased, the current increases only slightly until the electrolysis occurs. With the electrolysis, from a certain point the current is rapidly increased. If a current value actually measured by the current detecting means 3b is larger than the target current, a command for decreasing the voltage to decrease the current is transmitted to the current controlling means 3e (S25). On the other hand, a current value actually measured by the current detecting means 3b is smaller than the target current, a command for increasing the voltage to increase the current is transmitted to the current controlling means 3e (S26). The current controlling means 3e which receives the command transmits to the current setting means 3a a command for increasing the current in accordance with the received command. According to this, the current setting means 3a set the current corresponding to the command. If a current value actually measured by the current detecting means 3b is within a range of the target current, a command for maintaining the set current is transmitted to the current controlling means 3a or the current condition is maintained. In the controlling step, the matter that each step is constantly repeated with a predetermined timing is the same as the first embodiment. The target current is previously determined depending on the size of the electrolytic cell 4 and the amount of the electrolytic solution. For example, if the number of rotations is 1000 (rpm), the target current is set to 8.0 A (S29). When the voltage is increased and the current is started to flow, the current is rapidly increased from the time when the oxy-hydrogen gas is started to be generated. In accordance with this, the current controlling means 3e controls such that the current actually loaded to the electrolytic solution is the predetermined target current of 8.0 A. Moreover, a controlling method is the same as the first embodiment and for example, such methods as changing the application timing of the input voltage to control such that a current value is a constant value and controlling the input voltage by changing a voltage value can be performed. For example, by using pulsed application timing, a voltage duty can be changed.

By doing this, hydrogen gas in an optimum state of the internal combustion can be generated, and wasteful electric power use accompanied by temperature increase to generate water vapor can be prevented.

### Industrial Applicability

The oxy-hydrogen gas generator according to the present invention can be widely applied to an apparatus having a combustion process including the internal combustion. In particular, since sufficient oxy-hydrogen gas can be generated with low voltage and current, the oxy-hydrogen gas generator can be applied to the internal combustion of vehicles and ships.

The application claims priority based on the Japanese Patent Application No. 2009-231942 filed on September 10, 2009, the entirety of which is incorporated herein by reference.

### Reference Signs List

1 oxy-hydrogen gas generator
2 power source
3 inverter
4 electrolytic cell
10 anode side electrode plate
11 cathode side electrode plate

## Claims

1. An oxy-hydrogen gas generator comprising:
a power source;
an inverter electrically connected to said power source;
an electrolytic cell which is electrically connected to said inverter and internally includes an anode and a cathode to which a voltage is applied from said inverter; and
nano-clustered resonant water produced by previously applying ultrasonic wave vibration with a predetermined frequency to pure water and stored in said electrolytic cell, wherein said inverter includes current detecting means which detects a value of a current actually flowed from said inverter to said anode and said cathode of said electrolytic cell and said inverter controls the amount of application of said voltage to said nano-clustered resonant water so as to maintain current detected by said current detecting means at a target current.

2. An oxy-hydrogen gas generator according to claim 1, wherein said oxy-hydrogen gas generator is connected to an internal combustion, and said inverter, in accordance with the number of rotations of a rotation shaft of said internal combustion, switches to a predetermined target current value corresponding to said number of rotations.

3. An oxy-hydrogen gas generator according to claim 1 or 2, wherein said anode and said cathode are titanium alloy having iridium or a platinum layer on its surface.

4. An oxy-hydrogen gas generator according to any one of claims 1 to 3, wherein each of said anode and said cathode is shaped to have a long side and a short side and is soaked in said electrolytic cell such that the short side is the depth direction of said nano-clustered resonant water.

5. An oxy-hydrogen gas generator according to any one of claims 1 to 4, wherein said electrolytic cell is made of resin.

6. An oxy-hydrogen gas generator according to any one of claims 1 to 5, wherein said oxy-hydrogen gas generator includes a temperature sensor which detects a temperature of said electrolytic cell, said inverter includes temperature monitoring means which monitors a temperature detected by said temperature sensor, if the temperature detected by said temperature sensor reaches a limit temperature to generate water vapor, said inverter transmits a command to said current controlling means for setting a previously set current in an abnormal temperature, and said current controlling means transmits a command to said current setting means for controlling said voltage to set said current in an abnormal temperature.

7. An oxy-hydrogen gas generator according to any one of claims 1 to 6, wherein said electrolytic cell includes a gas collection port which collects oxy-hydrogen gas generated on an upper lid of said electrolytic cell, and a plurality of partitions are provided adjacent to said gas collection port on the inner side of said upper lid to surround said gas collection port and a gap is provided between adjacent partitions.

8. An internal combustion which sucks fuel gas for combustion, wherein hydrogen gas and oxygen gas generated by the oxy-hydrogen gas generator according to any one of claims 1 to 7 are mixed with said fuel gas before said combustion and burned.
